# EUROPÄISCHE PATENTANMELDUNG

(11) **EP 1 174 818 A1**
(43) Veröffentlichungstag der Anmeldung: **23.01.2002**
(21) Anmeldenummer: 01440169.9
(22) Anmeldetag: 14.06.2001
(51) Int. Cl.: G06F 19/00, A63F 13/12, H04L 29/06

(54) **Verfahren zum Bereitstellen eines Spiels für ein Mobilfunk-Endgerät eines Teilnehmers sowie Programm-Module und Mittel hierfür**

(30) Priorität: 20.07.2000 DE 10035348
(71) Anmelder: ALCATEL, 75008 Paris (FR)
(72) Erfinder: Eisinger, Bernd, 3744 Stockern (AT); Ullmann, Gottfried, 1230 Vienna (AT)
(74) Vertreter: Brose, Gerhard

(57) **Zusammenfassung**

Die vorliegende Erfindung betrifft ein Verfahren zum Bereitstellen eines Spiels für ein Mobilfunk-Endgerät (TERA) eines Teilnehmers (SUBA), ein Endgerät-Programm-Modul (PMT) hierfür, ein Server-Programm-Modul (PMS) hierfür, ein Gebührenrechner-Programm-Modul (PMAC) zur Berechnung von Gebühren im Zusammenhang mit dem Bereitstellen des Spiels sowie ein Mobilfunk-Endgerät (TERA), einen Server (SER) und einen Gebührenabrechnungsrechner (ACC).

Bei dem Verfahren sendet das Mobilfunk-Endgerät (TERA) über ein drahtloses Netzwerk (NET) eine Anforderungsnachricht mit einer Anforderung zur Teilnahme an einem Spiel sowie mit einer insbesondere zur Nutzung des Netzwerkes (NET) verwendeten Identifikationskennung (IDA) des Teilnehmers (SUBA) an einen Server (SER). Der Server führt in Abhängigkeit von der Anforderungsnachricht ein Spiele-Programm-Modul (PL) zur Ausführung des gewünschten Spieles aus, ermittelt dabei ein Spiele-Ergebnis (RESA) und übermittelt dieses dem Mobilfunk-Endgerät, das das Ergebnis ausgibt. Ferner speichert eine Speichereinrichtung (DB) das mindestens eine Ergebnis in Zusammenhang mit der Identifikationskennung, wobei das Ergebnis aus der Speichereinrichtung (DB) nach Beendigung des Spieles abrufbar ist.

## Beschreibung

Die vorliegende Erfindung betrifft ein Verfahren zum Bereitstellen eines Spiels für ein Mobilfunk-Endgerät eines Teilnehmers, ein Endgerät-Programm-Modul hierfür, ein Server-Programm-Modul hierfür, ein Gebührenrechner-Programm-Modul zur Berechnung von Gebühren im Zusammenhang mit einem Bereitstellen eines Spiels für ein Mobilfunk-Endgerät eines Teilnehmers sowie ein Mobilfunk-Endgerät mit einem Endgerät-Programm-Modul, einen Server mit einem Server-Programm-Modul und einen Gebührenabrechnungsrechner mit einem Gebührenrechner-Programm-Modul.

Mobilfunk-Endgeräte werden nicht nur in ihrem ursprünglichen Bereich der Sprachkommunikation, sondern auch für vielfältige sonstige Datenkommunikation, beispielsweise für das Versenden und Empfangen von sogenannten SMS-Nachrichten (SMS = Short Message System), eingesetzt. In jüngerer Zeit kommen weitere Nutzungsmöglichkeiten hinzu, z.B. Zugang von Mobilfunk-Endgeräten zum Internet mit Hilfe beispielsweise der WAP-Technologie (WAP = Wireless Access Protocol) und/oder der GPRS-Technologie (General Packet Radio Service). Auf diesem Wege können prinzipiell auch von Servern des Internets bereitgestellte Spiele genutzt werden. Nicht jedes Mobilfunk-Endgerät kann jedoch einen Zugang zum Internet bereitstellen. Ferner ist der Zugang zum Internet im Allgemeinen gebührenpflichtig. Jedenfalls können weite Nutzerkreise die im Internet bereitgestellten Spiele nicht nutzen.

Es ist daher Aufgabe der vorliegenden Erfindung, an einem Mobilfunk-Endgerät eines Teilnehmers für den Teilnehmer attraktive Spiele bereitzustellen.

Diese Aufgabe wird gelöst durch ein Verfahren gemäß der technischen Lehre des Anspruchs 1, ein Endgerät-Programm-Modul gemäß der technischen Lehre des Anspruchs 6, ein Mobilfunk-Endgerät gemäß der technischen Lehre des Anspruchs 7, ein Server-Programm-Modul gemäß der technischen Lehre des Anspruchs 8, einen Server gemäß der technischen Lehre des Anspruchs 9, ein Gebührenrechner-Programm-Modul gemäß der technischen Lehre des Anspruchs 10 sowie einen Gebührenabrechnungsrechner gemäß der technischen Lehre des Anspruchs 11.

Der Erfindung liegt dabei der Gedanke zugrunde, dass ein Mobilfunk-Endgerät eines Teilnehmers über ein drahtloses Netzwerk Zugang zu einem Spiele-Server erhält, der dem Teilnehmer über das Mobilfunk-Endgerät die Teilnahme an einem Spiel ermöglicht. Das Spiel wird dadurch für den Teilnehmer besonders attraktiv, dass das Spiel nicht nur weitgehend ortsunabhängig nutzbar ist, sondern auch ein in dem jeweiligen Spiel erzieltes Ergebnis in eine Speichereinrichtung abgelegt wird und dort auch nach Beendigung des Spieles noch abgerufen werden kann. Eine Zuordnung des Ergebnisses zu dem Teilnehmer wird durch eine vom Mobilfunk-Endgerät im Zusammenhang der Anforderung des Spieles an den Server gesendeten Identifikationskennung des Teilnehmers erzielt. Vorzugsweise wird dabei eine zur Nutzung des drahtlosen Netzwerkes verwendete Identifikationskennung an den Server gesendet, die beispielsweise von dem Mobilfunk-Endgerät aus einem zum Betrieb des Mobilfunk-Endgeräts notwendigen SIM-Modul (SIM = Subscriber Identity Module) ausgelesen wird.

Durch die Verwendung eines Mobilfunk-Endgerätes ist das Spiel jederzeit verfügbar, wobei sich ferner durch die Speicherung des Ergebnisses im Zusammenhang mit der Identifikationskennung zahlreiche vorteilhafte, in den abhängigen Ansprüchen und in der Beschreibung dargestellte Varianten ergeben.

Beispielsweise kann als Spiel ein Glücks-, Wett- oder Wissensspiel, aber auch ein sogenanntes Adventure-Spiel durchführt werden.

In Abhängigkeit des jeweiligen Spiel-Ergebnisses kann einem Konto des Teilnehmers ein Abrechnungsbetrag gutgeschrieben oder belastet werden. Unabhängig davon ist es für den Betreiber des drahtlosen Netzwerkes und/oder des Spiele-Servers attraktiv, dem Teilnehmer eine Gebühr für die Nutzung des Spieles zu berechnen. Als Konto eignet sich in einer bevorzugten Variante der Erfindung zur Nutzung des drahtlosen Netzwerkes eingesetzten Gebührenabrechnungskonto des Teilnehmers.

Ferner kann das Ergebnis des Spieles in eine beispielsweise als sogenannte "Bestenliste" (engl.: high score) dienende Ergebnisliste eingetragen werden, in der weitere Ergebnisse des Teilnehmers und/oder weiterer Teilnehmer abgelegt sind. Die Ergebnisliste ist für den Teilnehmer mit seinem Mobilfunk-Endgerät abrufbar, so dass der Teilnehmer seine aktuellen Spiel-Ergebnisse und/oder Spiel-Ergebnisse der weiteren Teilnehmer einsehen kann.

Weitere Vorteile der Erfindung ergeben sich aus den abhängigen Ansprüchen sowie aus der Beschreibung.

Im Folgenden werden die Erfindung und ihre Vorteile anhand von Ausführungsbeispielen unter Zuhilfenahme der Zeichnung dargestellt.
- Figur 1: zeigt eine Anordnung zur Ausführung des erfindungsgemäßen Verfahrens mit einem erfindungsgemäßen Endgerät TERA, einer Vermittlungsstelle MSSP, einem Dienst-Steuerknoten SCP, einem erfindungsgemäßen Gebührenrechner ACC, einem erfindungsgemäßen Server SER und einer Speichereinrichtung DB.

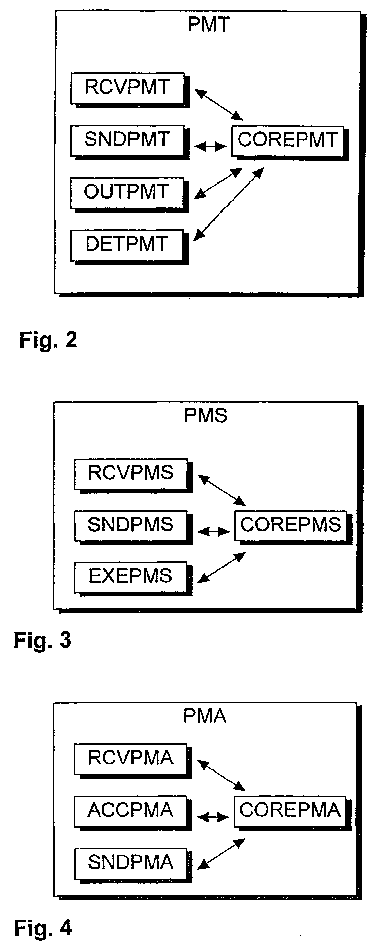

- Figur 2: zeigt einen schematischen Aufbau eines erfindungsgemäßen Endgerät-Programm-Moduls PMT.
- Figur 3: zeigt einen schematischen Aufbau eines erfindungsgemäßen Server-Programm-Moduls PMS.
- Figur 4: zeigt einen schematischen Aufbau eines erfindungsgemäßen Gebührenrechner-Programm-Moduls PMA.

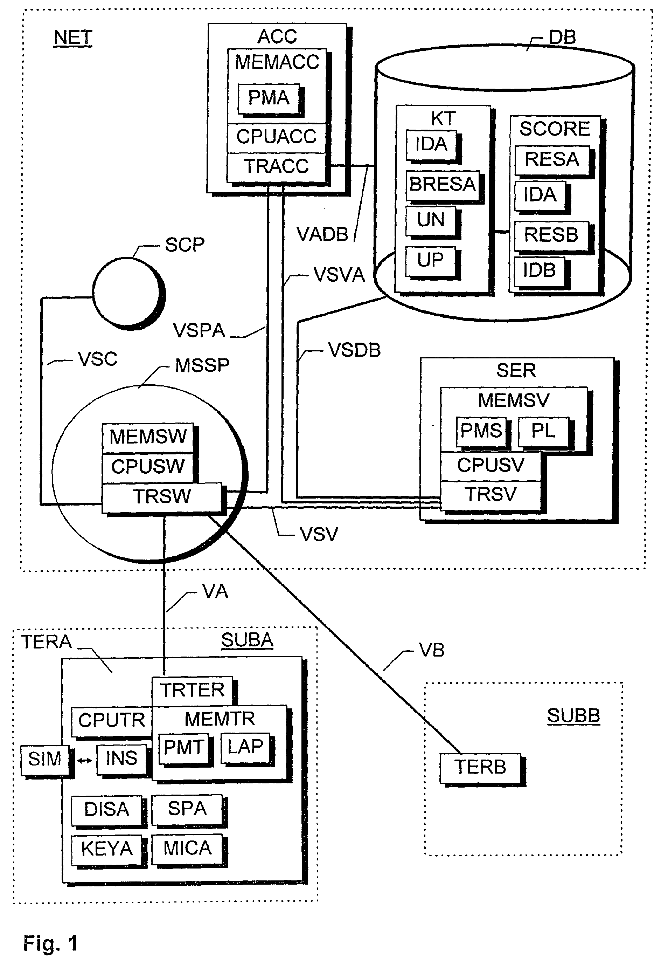

In Figur 1 ist eine beispielhafte Anordnung dargestellt, mit der die Erfindung ausgeführt werden kann. Figur 1 zeigt ein drahtloses Netzwerk NET, angedeutet durch einen punktierten Kasten. In weiteren punktierten Kästen angedeutete Teilnehmer SUBA und SUBB verfügen jeweils über Mobilfunk-Endgeräte TERA bzw. TERB, die über drahtlose Teilnehmerverbindungen VA bzw. VB mit einer Dienst-Vermittlungsstelle MSSP des Netzwerkes NET verbunden sind. Über das Netzwerk NET können die Endgerät TERA und TERB Zugang zu einem Server SER erhalten, mit dessen Hilfe an den Endgeräten TERA und TERB Spiele für die Teilnehmer SUBA bzw. SUBB bereitgestellt werden.

Das Endgerät TERA ist vorzugsweise ein Mobilfunk-Telefon oder ein für einen drahtlosen Anschluss an das Netzwerk NET ausgerüsteter Personal Computer, Personal Digital Assistant (PDA) oder dergleichen. Das Endgerät TERA weist ein Verbindungsmittel TRTER auf, bei dem es sich beispielsweise um ein Schnittstellenmodul zur Funk-Kommunikation gemäß den Spezifikation des europäischen Global Systems for Mobile communications (GSM), des japanischen Personal Handy phone Sets (PHS), des amerikanischen Advanced Mobile Phone Systems (AMPS), des Digital Enhanced Cordless Telecommunications (DECT) oder des UMTS (Universal Mobile Telecommunications System) oder dergleichen handelt. Mit dem Verbindungsmittel TRTER kann das Endgerät TERA die Verbindung VA zum Netzwerk NET aufbauen. Weiterhin weist das Endgerät TERA ein Steuermittel CPUTR sowie ein Speichermittel MEMTR auf. Das Steuermittel CPUTR ist beispielsweise ein Prozessor mit dem Programm-Code ausgeführt werden kann, der in dem Speichermittel MEMTR gespeichert ist. Bei dem Speichermittel MEMTR handelt es sich z.B. um eine Festplatte oder um RAM-Bausteine. Weiterhin weist das Endgerät TERA ein Anzeigemittel DISA sowie ein Eingabemittel KEYA auf. Das Anzeigemittel DISA ist beispielsweise ein Computer-Monitor oder ein LCD-Display (Liquid Cristal Display). Die Eingabemittel KEYA können eine Tastatur und/oder ein Mausinstrument aufweisen. Weiterhin weist das Endgerät TERA einen Lautsprecher SPA sowie ein Mikrofon MICA auf, mit denen Sprachaus- bzw. Spracheingabe möglich sind. Mit Hilfe von in dem Speichermittel MEMTR abgelegtem und durch das Steuermittel CPUTR ausführbaren Programmcode, insbesondere Programmcode eines im Folgenden als Endgerät-Modul PMT bezeichneten Endgerät-Programm-Moduls, kann das Endgerät TERA als ein Terminal für von dem Server SER bereitgestellte Spiele genutzt werden.

### Das Endgerät TERB gleicht im Wesentlichen dem Endgerät TERA und wird daher nicht weiter erläutert.

Von dem Netzwerk NET, das in dem Ausführungsbeispiel als Intelligentes Netzwerk (IN) ausgebildet ist, sind stellvertretend für weitere, in Figur 1 nicht gezeigte Einrichtungen, z.B. Vermittlungsstellen, Vorfeldeinrichtungen und Verbindungsleitungen, die Vermittlungsstelle MSSP, ein Dienst-Steuerknoten SCP, eine Speichereinrichtung DB, sowie der Server SER und ein Gebührenrechner ACC gezeigt. Die Vermittlungsstelle MSSP ist ein sogenannter Service Switching Point und der Dienst-Steuerknoten SCP ein sogenannter Service Control Point eines Intelligenten Netzes gemäß den Standards der ITU (International Telecommunication Union). Die Vermittlungsstelle MSSP leistet ferner Funktionen eines sogenannten Mobile Switching Centers. Die Teilnehmerverbindungen VA und VB werden durch nicht gezeigte sogenannte Base Station Subsysteme aufgebaut, die der Vermittlungsstelle MSSP vorgeschaltet oder in diese integriert sind. Die Base Station Subsysteme weisen jeweils zumindest eine Zugangseinrichtung (engl.: Base Transceiver Station = BTS) und eine Steuerungseinrichtung (engl.: Base Station Controller = BSC) zur Steuerung der Zugangseinrichtung auf.

Die Vermittlungsstelle MSSP ist über eine Verbindung VSC mit dem Dienst-Steuerknoten SCP, eine Verbindung VSPA mit dem Gebührenrechner ACC und über eine Verbindung VSV mit dem Server SER verbunden. Bei den Verbindungen VSC und VSV handelt es sich um Verbindungen, die vorzugsweise über einen Signalisierungskanal oder über ein Signalisierungsnetzwerk geführt werden und auf denen Signalisierungsnachrichten beispielsweise mit dem sogenannten Mobility Application Protocol (MAP) oder dem Camel Access Protocol (CAP) gesendet werden (CAMEL = Customized Application for Mobile Enhanced Logic). Ein solches Signalisierungsnetzwerk ist z.B. das zentrale Zeichengabesystem Nr. 7. Über die Verbindung VSPA sendet die Vermittlungsstelle MSSP an den Gebührenrechner ACC sogenannte Gebührentickets für Gesprächs- und/oder Datenverbindungen, die über die Vermittlungsstelle MSSP geführt werden, beispielsweise von den Teilnehmern SUBA und SUBB. Für Gesprächs- und/oder Datenverbindungen des Teilnehmers SUBA angefallene Gebühren UN verbucht der Gebührenrechner ACC auf einem Konto KT, das auf der Speichereinrichtung DB geführt wird.

Der Server SER und der Gebührenrechner ACC sind über eine Verbindung VSVA miteinander verbunden und haben jeweils über Verbindungen VSDB bzw. VADB Zugang zu der Speichereinrichtung DB. Die Verbindungen VSVA, VSDB und VADB werden beispielsweise auf einem LAN (Local Area Network) oder einem WAN (Wide Area Network) oder ebenfalls auf einem Signalisierungsnetzwerk aufgebaut.

Von der Vermittlungsstelle MSSP sind beispielhaft einige wesentliche Komponenten gezeigt, nämlich Verbindungsmittel TRSW sowie ein Steuermittel CPUSW und ein Speichermittel MEMSW. Mit dem Verbindungsmittel TRSW kann die Vermittlungsstelle MSSP Daten- und Sprachverbindungen zu Teilnehmern oder anderen, nicht gezeigten Vermittlungsstellen aufbauen sowie Signalisierungsverbindungen, wie z.B. die Verbindung VSC zu dem Dienst-Steuerknoten SCP aufbauen. Bei dem Steuermittel CPUSW handelt es sich um einen Prozessor oder um eine Gruppe von Prozessoren, die Befehle ausführen können, die in dem Speichermittel MEMSW gespeichert sind. Das Steuermittel CPUSW steuert die Funktionen der Vermittlungsstelle MSSP und nimmt dabei beispielsweise auf die Funktionen des Verbindungsmittels TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle MSSP weitere Baugruppen aufweisen, z.B. ein Koppelnetzwerk oder eine Schnittstelle zu einem Network Management System. Die Vermittlungsstelle MSSP bedient außer den Endgeräten TERA und TERB auch weitere, nicht dargestellte Endgeräte.

Der Dienst-Steuerknoten SCP erbringt für die Vermittlungsstelle MSSP, sowie auch für weitere, nicht dargestellte aber ähnlich ausgestattete Vermittlungsstellen Dienste und steuert die Erbringung von Diensten. Ein solcher Dienst ist beispielsweise der bekannte Freecall-Dienst (Rufnummern beginnend mit "0800").

Der Server SER weist ein Verbindungsmittel TRSV, sowie ein Steuermittel CPUSV und Speichermittel MEMSV auf. Bei dem Server SER kann es sich um ein Computersystem handeln, der durch ein UNIX-Betriebssystem oder ein Windows-NT-Betriebssystem betrieben wird. Der Server SER kann auch aus einem Netzwerk von Computersystemen bestehen. Das Steuermittel CPUSV ist ein Prozessor oder ein Cluster von Prozessoren, das die Befehle des Betriebssystems, das in dem Speicher MEMSV gespeichert ist, ausführt. Weiterhin sind in dem Speichermittel MEMSV, das beispielsweise eine Festplatte oder RAM-Bausteine umfasst, Programm-Module gespeichert, deren Programmcode-Sequenzen von dem Steuermittel CPUSV ausgeführt werden. Solche Programm-Module sind beispielsweise ein Server-Programm-Modul PMS, im Folgenden als Server-Modul PMS bezeichnet, das die Funktionen des Servers SER als Spiele-Server steuert, und ein Spiele-Programm-Modul PL, das durch das Server-Modul PMS aufgerufen und im Folgenden kurz Spiele-Modul PL genannt wird. Das Steuermittel CPUSV beeinflusst ferner die Funktionen des Verbindungsmittels TRSV, mit dem z.B. die erwähnten Verbindungen VSV und VSVA aufgebaut werden können. Der Server SER weist auch weitere, in Figur 1 nicht dargestellte Baugruppen auf, z.B. einen Monitor, eine Tastatur und eine Maus. Der Server SER bedient auch weitere, nicht dargestellte Endgeräte mit Spielen über die Vermittlungsstelle MSSP oder über weitere, nicht dargestellte Vermittlungsstellen.

Der Gebührenrechner ACC ist eine Gebührenerfassungseinrichtung und steht beispielhaft für weitere, nicht dargestellte Gebührenrechner des Netzwerkes NET. Der Gebührenrechner ACC bucht Nutzungs-Gebühren für die Nutzung des Netzwerkes NET auf Konten, die für an das Netzwerk NET angeschlossene Teilnehmer, beispielsweise die Teilnehmer SUBA und SUBB geführt werden. Für den Teilnehmer SUBA führt der Gebührenrechner ACC dementsprechend ein Konto KT. Der Gebührenrechner ACC empfängt über ein Verbindungsmittel TRACC, einer Sende- und Empfangsbaugruppe, auf der Verbindung VSSA von der Vermittlungsstelle MSSP oder auf der Verbindung VSVA von dem Server SER sogenannte Gebührentickets. Gebührentickets sind Nachrichten, in denen einer Teilnehmernummer oder einer Teilnehmerkennziffer zugeordnete Gebühren angegeben sind. Die in einem Gebührenticket angegeben Gebühren bucht dann ein Gebührenrechner-Programm-Modul PMA, im Folgenden kurz Gebührenrechner-Modul PMA, des Gebührenrechners ACC auf ein für die Teilnehmernummer geführtes Konto, für den Teilnehmer SUBA auf das Konto KT. Das Gebührenrechner-Modul PMA ist in einem Speichermittel MEMACC des Gebührenrechners ACC abgelegt. In dem Gebührenrechner-Modul PMA enthaltener Programmcode wird durch ein Steuermittel CPUACC ausgeführt, das z.B. ein Prozessor oder Prozessorcluster ist. Das Konto KT ist beispielsweise in einer Datenbank geführt, die in einem Speichermittel MEMACC des Gebührenrechners ACC abgelegt ist. Vorliegend sind die Daten des Kontos KT jedoch in der Speichereinrichtung DB abgelegt. Das Speichermittel MEMACC besteht z.B. aus RAM-Bausteinen und Festplatten-Laufwerken.

Im Folgenden ist ein typischer Verfahrensablauf zum Bereitstellen eines Spiels für ein das Endgerät TERA des Teilnehmers SUBA erläutert:

Der Teilnehmer SUBA gibt einen Startbefehl zur Durchführung eines gewünschten Spieles in sein Endgerät TERA ein, beispielsweise an dem Eingabemittel KEYA durch Drücken einer Taste an einer Tastatur oder durch Aktivieren eines Mausinstrumentes oder durch einen über das Mikrofon MICA gegebenen Sprachbefehl. Durch den Startbefehl wird das Endgerät-Modul PMT aktiviert. Die Taste an der Tastatur kann eine dedizierte, für das Spiel vorgesehen Taste sein, oder eine sogenannte Soft-Key Taste, deren kontext-abhängige Funktion beispielsweise durch das Endgerät-Modul PMT gesteuert wird. Das Endgerät-Modul PMT kann beispielsweise ein Programm in der Programmiersprache Java sein und durch einen WAP-Browser (WAP = Wireless Access Protocol) und/oder ein sogenanntes Run-Time Environment, das z.B. einen Java-Interpreter aufweist, ausgeführt werden.

Eine als Erfassungsmittel dienende Einlesefunktion DETPMT des Endgerät-Moduls PMT erfasst den Startbefehl. Die Einlesefunktion DETPMT ist beispielsweise eine Programmfunktion, die von einem zentralen Steuerteil COREPMT des Endgerät-Moduls PMT aktiviert wird. Die Einlesefunktion DETPMT kann auch z.B. eine sogenannte Java Bean sein, wenn das Endgerät-Modul PMT in der Programmiersprache Java implementiert ist. Zusätzlich zu dem Startbefehl erfasst die Einlesefunktion DETPMT eine Identifikationskennung IDA des Teilnehmers SUBA, die den Teilnehmer SUBA bei der Teilnahme an dem Spiel identifiziert. Die Identifikationskennung IDA ist z.B. ein Zeichencode, den der Teilnehmer SUBA über die Eingabemittel KEYA eingeben oder über das Mikrofon MICA diktieren kann. Vorzugsweise ist die Identifikationskennung IDA jedoch eine Identifikationskennung, die zur Nutzung des Netzwerkes NET verwendet wird. In diesem vorliegend gegebenen Fall ist die Identifikationskennung IDA auf einem SIM-Modul gespeichert, das der Teilnehmer SUBA zum Betreiben des Endgeräts TERA in einen Modulleser INS des Endgeräts TERA einsetzt. Die Einlesefunktion DETPMT ruft daher die Identifikationskennung IDA bei dem Modulleser INS ab. Die Einlesefunktion DETPMT kann die Identifikationskennung IDA jedoch möglicherweise auch aus einem vorbestimmten Bereich der Speichermittel MEMTR auslesen.

Anschließend sendet das Endgerät TER eine Anforderungsnachricht mit einer Anforderung zur Teilnahme an dem Spiel sowie mit der Identifikationskennung

IDA an den Server SER. Dabei bereitet eine als Sendemittel dienende Sendefunktion SNDPMT die Anforderungsnachricht vor und übergibt diese dem Verbindungsmittel TRTER. Dieses versendet die Anforderungsnachricht beispielsweise als SMS-Nachricht (SMS = Short Message System) oder als GPRS-Paket (GPRS = General Packet Radio Service), in denen jeweils die Adresse des Servers SER angegeben ist, über die Verbindung VA an die Vermittlungsstelle MSSP zur Weiterleitung über die Verbindung VSV an den Server SER. Die Sendefunktion SNDPMT ist wie die Einlesefunktion DETPMT eine von dem von dem zentralen Steuerteil COREPMT gesteuerte Programmfunktion.

In einem anderen Szenario adressiert das Endgerät TERA die Anforderungsnachricht nicht direkt an den Server SER. Die Anforderungsnachricht enthält in diesem Fall einen Kennzeichner für das gewünschte Spiel. Das Endgerät TERA sendet die Anforderungsnachricht zunächst an die Vermittlungsstelle MSSP, die anhand des Kennzeichners ermittelt, dass die Anforderungsnachricht nicht einen an einen Teilnehmer gerichteten Verbindungswunsch betrifft, sondern eine Dienstanforderung darstellt. Die Vermittlungsstelle MSSP fragt daher den Dienst-Steuerknoten SCP nach Instruktionen bezüglich der Anforderungsnachricht. Der Dienst-Steuerknoten SCP weist daraufhin die Vermittlungsstelle MSSP dazu an, die Verbindung VSV zum Server SER aufzubauen und so eine Verbindung zwischen dem Endgerät TERA und dem Server SER herzustellen.

Der Server SER empfängt die Anforderungsnachricht über das Verbindungsmittel TRSV, das diese an eine als Empfangsmittel dienende Empfangsfunktion RCVPMS des Server-Modul PMS übergibt. Die Empfangsfunktion RCVPMS kann beispielsweise eine sogenannte Java Bean oder eine Programmfunktion sein und wird von einem zentralen Steuerteil COREPMS des Server-Moduls PMS aufgerufen und kontrolliert.

Eine als Ausführungsmittel dienende Ausführungsfunktion EXEPMS des Server-Modul PMS ermittelt aus der Anforderungsnachricht, welches Spiel der Teilnehmer SUBA spielen möchte und ruft je nach Auswahl ein geeignetes, im Speicher MEMSV abgelegtes Spiele-Modul auf. Vorliegend ist aus Gründen der Übersichtlichkeit lediglich ein Spiele-Modul PL gezeigt, das beispielsweise ein Glücks-,

Wett- oder Wissensspiel ausführt oder simuliert.

Bei der Ausführung des Spiele-Moduls PL sind verschiedene Varianten möglich, von denen zunächst eine erste beispielhaft dargestellt wird.

Beispielsweise kann bereits in der Anforderungsnachricht eine Losnummer für eine Lotterie enthalten sein. Die Losnummer kann beispielsweise durch das Endgerät-Modul PMT erzeugt oder durch den Teilnehmer SUBA eingegeben worden sein. Das Spiele-Modul PL generiert dann beispielsweise mit Hilfe eines Zufallszahlengenerators eine Losnummer und übergibt diese dem Server-Modul PMS. Dieses ermittelt dann als resultierendes Ergebnis RESA, ob die generierte Losnummer mit der durch den Teilnehmer SUBA gesetzten Losnummer aus der Anforderungsnachricht übereinstimmt und sendet das Ergebnis RESA an das Endgerät TERA mit Hilfe der Verbindungsmittel TRSV sowie einer als Sendemittel dienenden Sendefunktion SNDPMS des Server-Moduls PMS. Das Endgerät TERA empfängt das Ergebnis RESA über die Verbindungsmittel TRTER, die das Ergebnis RESA an Empfangsmittel RCVPMT weitergeben, die beispielsweise ebenfalls eine Funktion des Endgerät-Moduls PMT sind. Eine als Ausgabemittel dienende Ausgabefunktion OUTPMT des Endgerät-Moduls PMT gibt dann das Ergebnis RESA das Anzeigemittel DISA zur Anzeige für den Teilnehmer SUBA und/oder generiert eine Sprachnachricht mit dem Ergebnis RESA zur Ausgabe über den Lautsprecher SPA.

Die Sendefunktion SNDPMS sendet das Ergebnis RESA sowie die Identifikationskennung IDA oder eine davon abhängende, den Teilnehmer SUBA identifizierende Kennung zur Speicherung an die Speichereinrichtung DB, aus der das Ergebnis RESA auch nach Beendigung des Spieles beispielsweise durch das Endgerät TERA, den Server SER oder den Gebührenrechner ACC abrufbar ist. Die Speichereinrichtung DB trägt das Ergebnis RESA und die Identifikationskennung IDA in eine Ergebnisliste SCORE ein, in der bereits ein von dem Teilnehmer SUBB ebenfalls bei der Durchführung eines Spieles der obigen Art erzieltes Ergebnis RESB zusammen mit dessen Identifikationskennung IDB abgelegt sind. Die Ergebnisliste SCORE ist vorliegend eine sogenannte Besten- oder "Highscore"-Liste, in die die jeweils besten bei der bei der Durchführung des obigen Spieles erzielten Ergebnisse eingetragen werden. Die Ergebnisliste SCORE kann von den Endgeräten TERA und TERB jeweils abgefragt werden, beispielsweise unter Kontrolle des Servers SER.

In der vorliegenden Ausgestaltung sendet die Sendefunktion SNDPMS das Ergebnis RESA sowie die Identifikationskennung IDA oder eine davon abhängende, den Teilnehmer SUBA identifizierende Kennung auch an den Gebührenrechner ACC, der diese Informationen über die Verbindungsmittel TRACC empfängt und an eine als Empfangsmittel dienende Empfangsfunktion RCVPMA des Gebührenrechner-Moduls PMA weitergibt. Die Empfangsfunktion RCVPMA sowie eine als Buchungsmittel dienende Buchungsfunktion ACCPMA und eine Sendefunktion SNDPMA sind jeweils Programmfunktionen oder Programmteile, die von einem zentralen Steuerteil COREPMA des Gebührenrechner-Moduls PMA gesteuert und aufgerufen werden. Die Buchungsfunktion ACCPMA ermittelt Spiele-Ergebnis-Abrechnungsdaten BRESA aus dem Ergebnis RESA sowie für die Nutzung des Spiele-Moduls PL angefallene Spiele-Nutzungs-Abrechnungsdaten UP. Die Spiele-Abrechnungsdaten BRESA und UP sowie die Identifikationskennung IDA werden der Sendefunktion SNDPMA zum Senden an die Speichereinrichtung DB übergeben, welche die Spiele-Abrechnungsdaten BRESA und UP auf dem Konto KT einträgt. Wenn der Teilnehmer SUBA beispielsweise eine korrekte Losnummer in der Anforderungsnachricht angegeben hatte, werden die Spiele-Ergebnis-Abrechnungsdaten BRESA als Gewinn verbucht. Der Teilnehmer SUBA erhält später eine Rechnung, beispielsweise eine Telefonrechnung, über die für das Konto KT gebuchten Abrechnungsdaten BRESA, UN und UP.

Die Spiele-Ergebnis-Abrechnungsdaten BRESA und/oder die Spiele-Nutzungs-Abrechnungsdaten UP könnten jedoch auch auf ein separates Konto des Teilnehmers SUBA gebucht werden. Ferner kann das Konto KT auch in den Speichermitteln MEMACC geführt werden.

Das Konto KT könnte jedoch auch ein sogenanntes Prepaid-Konto sein, das nur solange von dem Teilnehmer SUBA genutzt werden kann, wie ein Guthaben auf dem Konto KT vorhanden ist. In diesem Fall prüft beispielsweise die Vermittlungsstelle MSSP und/oder der Server SER vor der Ausführung des in der jeweiligen Anforderungsnachricht gewünschten Spiels, ob noch ein Guthaben vorhanden ist. Der Server SER führt dann nur bei vorhandenem Guthaben ein von dem Teilnehmer SUBA gewünschtes Spiel durch.

Es ist auch möglich, dass beispielsweise der Gebührenrechner ACC z.B. jeden Monat auf das Konto KT eine vorbestimmte Gutschrift zur Teilnahme an dem Spiel bucht, von der beispielsweise die Abrechnungsdaten UP, gegebenenfalls auch negative Spiele-Ergebnis-Abrechnungsdaten BRESA abgebucht werden könnten, falls der Teilnehmer SUBA in der Anforderungsnachricht eine falsche Losnummer angegeben hatte. Beispielsweise könnte der Teilnehmer SUBA gebührenfrei monatlich zehnmal an der oben dargestellten Lotterie teilnehmen.

Es ist auch möglich, dass der Server SER das Ergebnis RESA nur an die Speichereinrichtung DB sendet und nicht an den Gebührenrechner ACC. Ferner könnte der Server SER das Ergebnis RESA nicht an die Speichereinrichtung DB, sondern lediglich an den Gebührenrechner ACC zur Speicherung und Verbuchung senden.

Weiter ist es möglich, dass das Server-Modul PMS die Spiele-Ergebnis-Abrechnungsdaten BRESA und/oder die Spiele-Nutzungs-Abrechnungsdaten UP ermittelt und dem Gebührenrechner ACC und/oder der Speichereinrichtung DB zur Buchung oder lediglich zur Speicherung übermittelt. Die Spiele-Ergebnis-Abrechnungsdaten BRESA und/oder die Spiele-Nutzungs-Abrechnungsdaten UP können dann später, beispielsweise im Rahmen einer Monatsabrechnung, von einem (nicht dargestellten) Gebührenabrechnungsrechner verarbeitet werden. Gebührenabrechnungsrechner werden häufig auch als "Billing Center" (BC) oder "Customer Care and Billing Center" (CCBC) bezeichnet.

### Weitere Spiele-Varianten werden im Folgenden beispielhaft dargestellt:

Die Ergebnisliste SCORE könnte beispielsweise dazu dienen, gewissermaßen als "zweite Chance" eine monatliche Lotterie zu veranstalten, bei unter den in der Ergebnisliste SCORE eingetragenen Spiele-Teilnehmern ein weiterer Gewinn verlost wird, den z.B. der Server SER ermittelt und der Gebührenrechner ACC den jeweiligen Konten der Spiele-Teilnehmer verbucht, z.B. dem Konto KT. Insbesondere in einem solchen Szenario ist die Ergebnisliste SCORE zweckmäßigerweise nicht nur eine Besten-Liste, in die nur "Gewinner" eingetragen werden, sondern eine Liste, in die ganz allgemein von Spiele-Teilnehmern getippte Losnummern eingetragen werden, also auch solche Losnummern, die bei der "ersten Chance" erfolglos waren.

Ferner könnte das Endgerät-Modul PMT beispielsweise dem Teilnehmer SUBA über das Anzeigemittel DISA ein Eingabe- und/oder Auswahlfeld anzeigen, in das der Teilnehmer SUBA eine Wettkennziffer für eine Fußball- oder eine Zahlenwette einträgt. Diese gesetzte Wettkennziffer sendet das Endgerät TERA in einer Spiele-Anforderungsnachricht an den Server SER. Der Server SER speichert die gesetzte Wettkennziffer zunächst in der Speichereinrichtung DB ab. Wenn später das jeweilige Wett-Ergebnis des für die Wette maßgeblichen Ereignisses vorhanden ist, das beispielsweise ein Fußballspiel, ein Autorennen oder eine Zahlenlotterie ist, vergleicht der Server SER das Wett-Ergebnis mit der von dem Teilnehmer SUBA gesetzten Wettkennziffer. Das dabei ermittelte jeweilige Ergebnis sendet der Server SER an das Endgerät TERA sowie die Speichereinrichtung DB und/oder den Gebührenrechner ACC zur bereits dargestellten Weiterverarbeitung.

Das Endgerät TERA und der Server SER können bei der Erbringung eines von dem Teilnehmer SUBA gewünschten Spieles auch interaktiv zusammenwirken. Beispielsweise könnte der Server SER eine Wissensfrage an das Endgerät TERA senden, die der Teilnehmer SUBA beantworten muss. Bei korrekter Antwort wird dann dem Konto KT ein Abrechnungsbetrag gutgeschrieben wird.

Ferner kann das Endgerät-Modul PMT einen Zufallsgenerator aufweisen, der jeweils einen Wett-Zufallscode in eine an den Server SER gerichtete Spiele-Anforderungsnachricht einträgt. Nach Erhalt der Spiele-Anforderungsnachricht vergleicht das Server-Modul PMS den Wett-Zufallscode mit einem Ziel-Zufallscode, der entweder ad hoc erzeugt wird (siehe oben) oder aus eine Liste mit bereits hinterlegten Ziel-Zufallscodes abgefragt wird. Wenn Wett-Zufallscode und Ziel-Zufallscode übereinstimmen, erhält der Teilnehmer SUBA eine Gutschrift auf seinem Konto KT.

In einer weiteren Variante spielen die Teilnehmer SUBA und Teilnehmer SUBB gemeinsam ein von dem Server SER bereitgestelltes Spiel. Dieser stellt beispielsweise beiden Teilnehmern jeweils Wissensfragen, wobei derjenige Teilnehmer eine Gutschrift auf seinem Konto erhält, der zuerst die richtige Antwort gibt.

Es versteht sich, dass beliebige weitere Spiele, z.B. sogenannte Adventure-Spiel durch das Server-Modul PMS ausgeführt werden können. Ferner sind Spiele-Kombinationen möglich, beispielsweise eine Kombination aus einem Wett- oder Lotteriespiel mit einem Wissensspiel.

Der zur Spiele-Erbringung notwendige Programmcode kann vollständig in dem Endgerät-Modul PMT enthalten sein. Es ist jedoch auch möglich, dass der Server SER im Rahmen der Spiele-Erbringung Programmcode eines Anwendungs-Programm-Moduls LAP, beispielsweise in Form von Java-Applets und/oder von Makro-Code, an das Endgerät TERA sendet.

Programmcode des Anwendungs-Programm-Moduls LAP oder des Endgerät-Moduls PMT kann beispielsweise die Anzeige auf dem Anzeigemittel DISA steuern und/oder Ausgaben über den Lautsprecher SPA erzeugen und dabei beispielsweise einen Spielautomaten simulieren. Ferner könnte der Programmcode eine Tastatur der Eingabemittel KEYA derart steuern, dass deren Tasten zumindest teilweise als sogenannte Soft-Keys zur Steuerung des aktuell durchgeführten Spieles dienen. Während des Spieles kann dann z.B. jeder Tastendruck auf einen solchen Soft-Key zu Nachricht an den Server SER jeweils mit einem Lotterieeinsatz und damit zu einem Spiel(teil-)gewinn oder einem Spiel(teil-)verlust führen.

Es ist auch möglich, dass das Endgerät-Modul PMT von dem Server SER oder einem weiteren, nicht dargestellten Server auf das Endgerät TERA geladen wird. Dazu könnte das Endgerät TERA beispielsweise mit Hilfe des bereits erwähnten WAP-Browsers eine Anforderung an den Server SER senden, der dann das Endgerät-Modul PMT auf das Endgerät TERA herunterlädt.

Verschiedene Abwandlungen der gezeigten Einrichtungen sind ohne Weiteres möglich. Beispielsweise kann der Gebührenrechner ACC in die Vermittlungsstelle MSSP oder in den Server SER integriert sein. Dann erfüllen das Steuermittel CPUSW bzw. das Steuermittel CPUSV die Funktionen des Steuermittels CPUACC, das Speichermittel MEMSW bzw. das Speichermittel MEMSV die Funktionen des Speichermittels MEMACC sowie das Verbindungsmittel TRSW bzw. das Verbindungsmittel TRSV die Funktionen des Verbindungsmittels TRACC. Die Verbindungen VSPA bzw. VSVA sind dann interne Verbindungen in der Vermittlungsstelle MSSP bzw. in dem Server SER. Ferner kann der Server SER in die Vermittlungsstelle MSSP integriert sein oder die Vermittlungsstelle MSSP die Programm-Module PMS und PL ausführen. Es ist ferner möglich, dass die Vermittlungsstelle MSSP das Gebührenrechner-Modul PMA ausführt.

In einer weiteren Variante sind der Server SER und/oder der Gebührenrechner ACC in den Dienst-Steuerknoten SCP integriert. Dieser führt dann das Server-Modul PMS und das Spiele-Modul PL bzw. das Gebührenrechner-Modul PMA aus.

Ferner können die Vermittlungsstelle MSSP und der Dienst-Steuerknoten SCP zu einer Einheit kombiniert sein, einem sogenannten Service Switching and Control Point (SSCP), der je nach Konfiguration das Gebührenrechner-Modul PMA und/oder das Server-Modul PMS und/oder das Spiele-Modul PL ausführt.

Weiter kann das Spiele-Modul PL in das Server-Modul PMS integriert sein, beispielsweise als ein Programmcode-Abschnitt oder als eine Programmfunktion. Es ist ferner auch möglich, dass das Gebührenrechner-Modul PMA in das Server-Modul PMS integriert ist, das dann beispielsweise durch den Server SER, die Vermittlungsstelle MSSP oder den Gebührenrechner ACC ausgeführt wird.

Es versteht sich, dass das Gebührenrechner-Modul PMA, das Endgerät-Modul PMT und das Server-Modul PMS jeweils in verschiedenen Programmiersprachen, beispielsweise Java, C, C++ und dergleichen implementiert werden können. Ferner ist die jeweils dargestellte Modul-Architektur nur beispielhaft zu verstehen. Die einzelnen Funktionen, beispielsweise die Empfangsfunktion RCVPMA und die Buchungsfunktion ACCPMA des Gebührenrechner-Moduls PMA, können auch als separate Programm-Module realisiert sein, die in funktionaler Einheit das Gebührenrechner-Modul PMA bilden und dabei unter Steuerung des zentralen Steuerteils COREPMA interagieren oder auch direkt, ohne Mitwirkung des zentralen Steuerteils COREPMA zusammenwirken.

## Patentansprüche

1. Verfahren zum Bereitstellen eines Spiels für ein Mobilfunk-Endgerät (TERA) eines Teilnehmers (SUBA), bei dem
- das Mobilfunk-Endgerät (TERA) über ein drahtloses Netzwerk (NET) eine Anforderungsnachricht mit einer Anforderung zur Teilnahme an einem Spiel sowie mit einer insbesondere zur Nutzung des drahtlosen Netzwerkes (NET) verwendeten Identifikationskennung (IDA) des Teilnehmers (SUBA) an einen Server (SER) sendet,
- der Server (SER) in Abhängigkeit von der Anforderungsnachricht ein Spiele-Programm-Modul (PL) zur Ausführung des gewünschten Spieles ausführt und dabei zumindest ein Ergebnis (RESA) des Spieles ermittelt,
- der Server (SER) dem Mobilfunk-Endgerät (TERA) das zumindest eine aus der Ausführung des Spiele-Programm-Moduls (PL) resultierende Ergebnis (RESA) übermittelt,
- das Mobilfunk-Endgerät (TERA) das mindestens eine Ergebnis (RESA) ausgibt und
- eine Speichereinrichtung (DB) das mindestens eine Ergebnis (RESA) in Zusammenhang mit der Identifikationskennung (IDA) speichert, wobei das mindestens eine Ergebnis (RESA) aus der Speichereinrichtung (DB) nach Beendigung des Spieles abrufbar ist.

2. Verfahren nach Anspruch 1, **dadurch gekennzeichnet, dass** Spiele-Abrechnungsdaten (BRESA, UN) aus dem mindestens einen Ergebnis (RESA) des Spieles und/oder für die Nutzung des Spiele-Programm-Moduls (PL) ermittelt werden und dass die Spiele-Abrechnungsdaten auf einem Konto (KT) des Teilnehmers (SUBA), insbesondere auf einem zur Nutzung des drahtlosen Netzwerkes (NET) eingesetzten Gebührenabrechnungskonto des Teilnehmers (SUBA), verbucht werden.

3. Verfahren nach Anspruch 1, **dadurch gekennzeichnet, dass** das Spiele-Programm-Modul (PL) ein Glücks-, Wett- oder Wissensspiel durchführt.

4. Verfahren nach Anspruch 1, **dadurch gekennzeichnet, dass** das mindestens eine Ergebnis (RESA) des Spieles in eine Ergebnisliste (SCORE) eingetragen wird, in der zumindest ein zweites, von einem zweiten Teilnehmer (SUBB) erzielten Ergebnis (RESB) des Spieles abgelegt ist.

5. Verfahren nach Anspruch 1, **dadurch gekennzeichnet, dass** das Spiele-Programm-Modul (PL) ein Anwendungs-Programm-Modul (LAP) an das Mobilfunk-Endgerät (TERA) sendet, dessen Programmcode das Mobilfunk-Endgerät (TERA) zur Durchführung des Spieles in Interaktion mit dem Server (SER) ausführt.

6. Endgerät-Programm-Modul (PMT) für ein für ein drahtloses Netzwerk (NET) vorgesehenes Mobilfunk-Endgerät (TERA) eines Teilnehmers (SUBA) zum Bereitstellen eines Spiels für das Mobilfunk-Endgerät (TERA), wobei das Endgerät-Programm-Modul (PMT) von einem Steuermittel des Mobilfunk-Endgeräts (TERA) ausgeführt werden kann, **dadurch gekennzeichnet,**
- **dass** das Endgerät-Programm-Modul (PMT) Erfassungsmittel (DETPMT) zum Erfassen eines durch den Teilnehmer (SUBA) zur Durchführung des Spieles gegebenen Startbefehls und zum Bestimmen einer insbesondere zur Nutzung des drahtlosen Netzwerkes (NET) verwendeten Identifikationskennung (IDA) des Teilnehmers (SUBA) aufweist,
- **dass** das Endgerät-Programm-Modul (PMT) Sendemittel (SNDPMT) zum Senden einer Anforderungsnachricht mit einer Anforderung zur Teilnahme an dem Spiel sowie mit der Identifikationskennung (IDA) an einen Server (SER) über das drahtlose Netzwerk (NET) aufweist,
- **dass** das Endgerät-Programm-Modul (PMT) Empfangsmittel (RCVPMT) zum Empfangen mindestens eines aus der Ausführung des Spiele-Programm-Moduls (PL) resultierenden Ergebnisses (RESA) aufweist, und
- **dass** das Endgerät-Programm-Modul (PMT) Ausgabemittel (OUTPMT) zum Ausgeben des mindestens Ergebnisses (RESA) an einer Ausgabeeinrichtung des Mobilfunk-Endgeräts (TERA) aufweist.

7. Mobilfunk-Endgerät (TERA) für ein drahtloses Netzwerk (NET) mit einem Endgerät-Programm-Modul (PMT) nach Anspruch 6 und einem Steuermittel (CPUTR) zur Ausführung des Endgerät-Programm-Moduls (PMT).

8. Server-Programm-Modul (PMS) für einen Servers (SER) zum Bereitstellen eines Spiels für ein Mobilfunk-Endgerät (TERA) eines Teilnehmers (SUBA), wobei das Server-Programm-Modul (PMS) von einem Steuermittel (CPUSV) des Servers (SER) ausgeführt werden kann, **dadurch gekennzeichnet,**
- **dass** das Server-Programm-Modul (PMS) Empfangsmittel (RCVPMS) zum Empfangen einer Anforderungsnachricht mit einer von einem Mobilfunk-Endgerät (TERA) gesendeten Anforderung zur Teilnahme an dem Spiel sowie mit einer insbesondere zur Nutzung des drahtlosen Netzwerkes (NET) verwendeten Identifikationskennung (IDA) des Teilnehmers (SUBA) aufweist,
- **dass** das Server-Programm-Modul (PMS) Ausführungsmittel (EXEPMS) zur Ausführung eines Spiele-Programm-Moduls (PL) zur Ausführung des gewünschten Spieles in Abhängigkeit von der Anforderungsnachricht sowie zur Ermittjung zumindest eines Ergebnisses (RESA) des Spieles aufweist,
- **dass** das Server-Programm-Modul (PMS) Sendemittel (SNDPMS) zum Senden des mindestens einen aus der Ausführung des Spiele-Programm-Moduls (PL) resultierenden Ergebnisses (RESA) an das Mobilfunk-Endgerät (TERA) aufweist,
- und **dass** die Sendemittel (SNDPMS) zum Senden des mindestens einen aus der Ausführung des Spiele-Programm-Moduls (PL) resultierenden Ergebnisses (RESA) in Zusammenhang mit der Identifikationskennung (IDA) an eine Speichereinrichtung (DB) ausgestaltet sind, aus der das mindestens eine Ergebnis (RESA) nach Beendigung des Spieles abrufbar ist.

9. Server (SER) mit einem Server-Programm-Modul (PMS) nach Anspruch 8 und einem Steuermittel (CPUSV) zur Ausführung des Server-Programm-Moduls (PMS).

10. Gebührenrechner-Programm-Modul (PMA) für einen Gebührenrechner (ACC) zur Berechnung von Gebühren im Zusammenhang mit einem Bereitstellen eines Spiels für ein Mobilfunk-Endgerät (TERA) eines Teilnehmers (SUBA) für ein drahtloses Netzwerk (NET), wobei das Gebührenrechner-Programm-Modul (PMA) von einem Steuermittel (CPUACC) des Gebührenrechners (ACC) ausgeführt werden kann, **dadurch gekennzeichnet,**
- **dass** das Gebührenrechner-Programm-Modul (PMA) Empfangsmittel (RCVPMA) zum Empfangen einer insbesondere zur Nutzung des drahtlosen Netzwerkes (NET) verwendeten Identifikationskennung (IDA) des Teilnehmers (SUBA) in Zusammenhang mit mindestens einem Ergebnis (RESA) des Spieles aufweist, das der Server (SER) in Abhängigkeit von einer von dem Mobilfunk-Endgerät (TERA) über ein drahtloses Netzwerk (NET) gesendeten Anforderungsnachricht mit Hilfe eines Spiele-Programm-Moduls (PL) zur Ausführung des gewünschten Spieles ausführt, wobei der Server (SER) das zumindest eine Ergebnis (RESA) des Spieles ermittelt, und
- **dass** das Gebührenrechner-Programm-Modul (PMA) Buchungsmittel (ACCPMA) zum Buchen von aus dem mindestens einen Ergebnis (RESA) des Spieles und/oder für die Nutzung des Spiele-Programm-Moduls (PL) ermittelten Spiele-Abrechnungsdaten auf ein Konto des Teilnehmers (SUBA), insbesondere auf ein zur Nutzung des drahtlosen Netzwerkes (NET) eingesetzten Gebührenabrechnungskonto des Teilnehmers (SUBA), aufweist.

11. Gebührenrechner (ACC) mit einem Gebührenrechner-Programm-Modul (PMA) nach Anspruch 10 und einem Steuermittel (CPUACC) zur Ausführung des Gebührenrechner-Programm-Moduls (PMA).

12. Speichermittel mit einem Endgerät-Programm-Modul (PMT) nach Anspruch 6 und/oder einem Server-Programm-Modul (PMS) nach Anspruch 8 und/oder einem Gebührenrechner-Programm-Modul (PMA) nach Anspruch 10.
